Europäisches Patentamt

European Patent Office

Office européen des brevets

(11) Publication number: **0 356 663 B1**

# EUROPEAN PATENT SPECIFICATION

(45) Date of publication of patent specification: **28.09.94** (51) Int. Cl.5: **B24B 49/16**

(21) Application number: **89112591.6**

(22) Date of filing: **10.07.89**

(54) **A grinding machine, and method and apparatus for controlling a grinding process.**

(30) Priority: **02.09.88 US 240021**

(43) Date of publication of application:
**07.03.90 Bulletin 90/10**

(45) Publication of the grant of the patent:
**28.09.94 Bulletin 94/39**

(84) Designated Contracting States:
**CH DE ES FR GB IT LI SE**

(56) References cited:
**DE-A- 3 430 557**
**DE-A- 3 636 770**
**DE-A- 3 741 592**

**WERKSTATT UND BETRIEB. vol. 121, no. 2, February 1988, MUNCHEN DE pages 117 - 120 ; J. Burek: "Adaptives Grenzregel-System für mehrstufiges Aussenrund-Einsteichschleifen".**

**WERKSTATTSTECHNIK, ZEITSCHRIFT FUR IN-DUSTRIELLE FERTIGUNG. vol. 65, no. 8,1975, BERLIN DE pages 453 - 461; R.S.HAHN: "Neue Entwicklungen beim Genauschleifen**

(73) Proprietor: **CINCINNATI MILACRON-HEALD CORPORATION**
**10 New Bond Street**
**Worcester Massachusetts 01606 (US)**

(72) Inventor: **Lambert, Edward L.**
**2 Denfield Drive**
**Westboro**
**Massachusetts, MA 01581 (US)**
Inventor: **Matson, Charles B.**
**61 Winter Hill Road**
**Holden**
**Massachusetts, MA 01520 (US)**
Inventor: **Vaillette, Bernard D.**
**73 Crestfield Lane**
**Leominster**
**Massachusetts, MA (US)**

(74) Representative: **Lally, William et al**
**FORRESTER & BOEHMERT**
**Franz-Joseph-Strasse 38**
**D-80801 München (DE)**

## Description

This invention relates generally to grinding machines employing a rotary abrasive wheel for carrying out grinding processes and, in particular, the invention relates to machines making use of a superabrasive grinding wheel, and the automatic control thereof.

It is known in grinding arts that superabrasive wheels, for example, cubic boron nitride, and diamond wheels, will tend to increase in sharpness as successive workpieces are ground, and thereby will result in higher metal removal rates for an equivalent normal force applied to the wheel, causing variations in sizing and finish.

It is well-known that reconditioning a superabrasive wheel causes it to behave in a dull fashion, since the grit is leveled with the bonding material. Through a variety of grinding actions, the bond becomes eroded as the wheel progressively grinds workpieces, exposing new, sharp grit material.

One prior art publication which discusses the superabrasive wheel and wheel dressing pattern is U.S. Patent 4,653,235, in which a method is disclosed whereby a watts transducer is utilised to sense grinding wheel drive motor power consumption over a predetermined time interval at a spark-out or dwell portion of the grinding cycle, and the power level during the transition from maximum grinding power to some predetermined lower power level for re-commencing feed is monitored. If the lower power level occurs before the time interval is reached, the wheel is known to have become too sharp for the intended use, and a dressing cycle is initiated to recondition and "dull" the now too-sharp wheel. The broad concept of monitoring wheel drive motor power consumption is well-known in machines using conventional grinding wheels, because it is simple and inexpensive and it is possible to determine the tangential force components from the equation: power equals $V_s$ times $F_t$, where $V_s$ is the grinding wheel speed in metres per second M/S. Power monitors have been very useful as gap elimination devices and crash detectors and have been used as the bases of adaptive control philosphies. However, power monitors do not lend themselves to measurement of normal force, $F_n$ which is considered imperative for wheel sharpeness measurement.

In evaluating wheel sharpness and controlling the grinding processes, other prior art patents have attempted to teach controlling the wheel feed rate by sensing deflection of the grinding wheel spindle. One such patent is U.S. Patent 3,344,560. The normal force is the principal deflection causing force in the grinding process, particularly with internal grinding machines, and some prior art machines have swivelled the wheehead to re-align the wheel with the workpiece, as the grinding wheel spindle is deflected.

There is disclosed in "Wekstatt und Betrieb", Volume 121 No. 2, pages 117 to 120 a grinding machine comprising a load cell within a wheel head mounting member, for permanently measuring the magnitude of normal force, and for varying the feed rate in response to the monitored normal force, taking into account wheel sharpness, to maintain a maximum normal cutting force.

Conversely in accordance with this invention there is provided a grinding machine for grinding a workpiece, said machine having a base, a wheelhead supported by said machine base for carrying a rotatable superabrasive grinding wheel, means for relatively feeding said wheel and a workpiece at a feed rate along a normal force vector between the two, and an apparatus for automatically and adaptively controlling and optimizing grinding processes and conditioning of the wheel during grinding of individual workpieces, said apparatus comprising:

means for measuring the magnitude of the normal force occurring between said wheel and said workpiece, said means including a force transducer mounted adjacent said wheelhead;

means for continuously monitoring the relative wheel sharpness, said wheel sharpness being a calculated value based upon the feed rate and the measured normal force;

means for determining the maximum allowable normal force between said wheel and said workpiece for the calculated sharpness of said wheel; and

means for automatically varying said feed rate during the grinding process in response to the calculated wheel sharpness to maintain a maximum allowable normal force for the calculated wheel sharpness to automatically condition the wheel and to optimize the grinding process.

According to this invention there is also provided a method for automatically conditioning a grinding wheel and optimizing grinding processes with a superabrasive grinding wheel in a grinding machine, said method including the steps of:

(a) rotating a workpiece to be ground on a workhead;

(b) rotating a superabrasive grinding wheel on a wheelhead;

(c) effecting relative feed movement between said workhead and wheelhead to cause contact of said wheel with said workpiece, said movement being set at an initial feed rate;

2

(d) detecting the normal contact force between said wheel and workpiece by a force transducer mounted adjacent said wheelhead;

(e) monitoring said normal contact force while grinding;

(f) continuously monitoring the relative wheel sharpness, being a calculated value based upon feed rate and the measured normal force;

(g) determining the maximum normal force allowable between said wheel and said workpiece for the calculated value wheel sharpness; and

(h) automatically adjusting the feed rate of said feed movement during grinding processes in accordance with said calculated wheel sharpness to maintain a substantially constant, maximum allowable normal contact force between said wheel and workpiece to optimise the wheel conditioning and grinding processes.

There will now be given a detailed description, to be read with reference to the accompanying drawings, of a plurality of grinding machines which are embodiments of this invention, having been selected for the purpose of illustrating the invention by way of example. In the accompanying drawings:

FIGURE 1 is a diagrammatic plan veiw of an internal grinding machine having automatic control;

FIGURE 2 is an elevational view taken through the workpiece shown in Figure 1;

FIGURE 3 is a close-up perspective view of the grinding wheelhead of Figure 1;

FIGURE 3a is frequency response plot of a load cell wheelhead mount vs. a standard wheelhead mount;

FIGURE 3b is a plot of grinding forces determined during a CBN grinding test;

FIGURE 4 is an enlarged plan view of a swivel plate and grinding wheelhead mount of Figure 1;

FIGURE 5 is a graph showing specific metal removal rate versus finish for a given wheel grade;

FIGURE 6 is a graph showing multiple plots of lambda versus accumulated volume removed, for plural infeed velocities, for a given wheelgrade;

FIGURE 6a is a plot of specific wheel power consumed vs. accumulated volume removed from a work;

FIGURE 7 is a graph plotting normal force versus accumulated volume for plural infeed rates;

FIGURE 8 is a graph of infeed force per unit time illustrating a controlled force system;

FIGURE 9 is a graph plotting normal force versus time as actually taken during a constant grind force cycle;

FIGURE 10 is a graph plotting lambda versus normal force;

FIGURE 11 is the top portoin of a flow chart for a preferred grinding system;

FIGURE 12 is the bottom portion of a flow chart for a preferred grinding system;

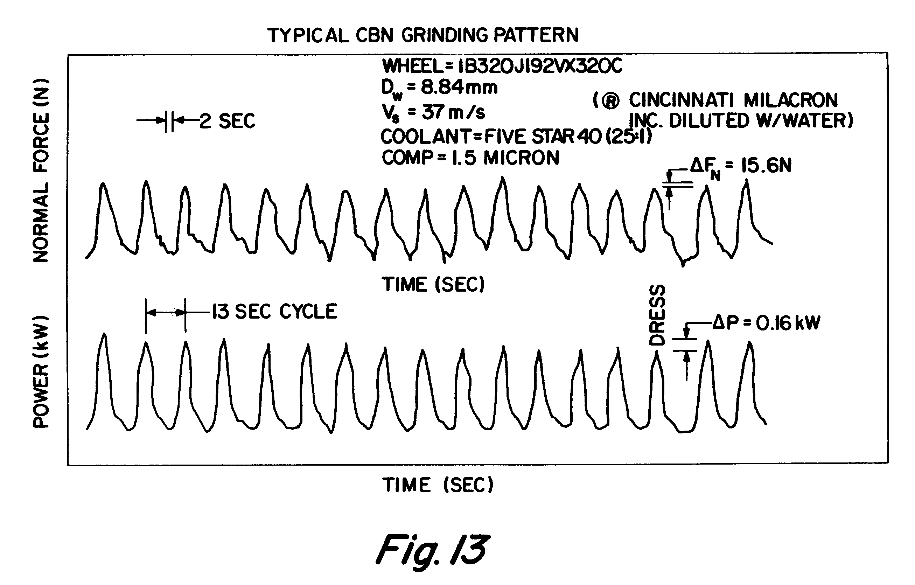

FIGURE 13 is a plot of a CBN grinding pattern, plotting normal force ($F_n$) and power ($K_w$) vs. time (sec.); and

FIGURE 14 is a schematic diagram of a CBN grinding test set-up.

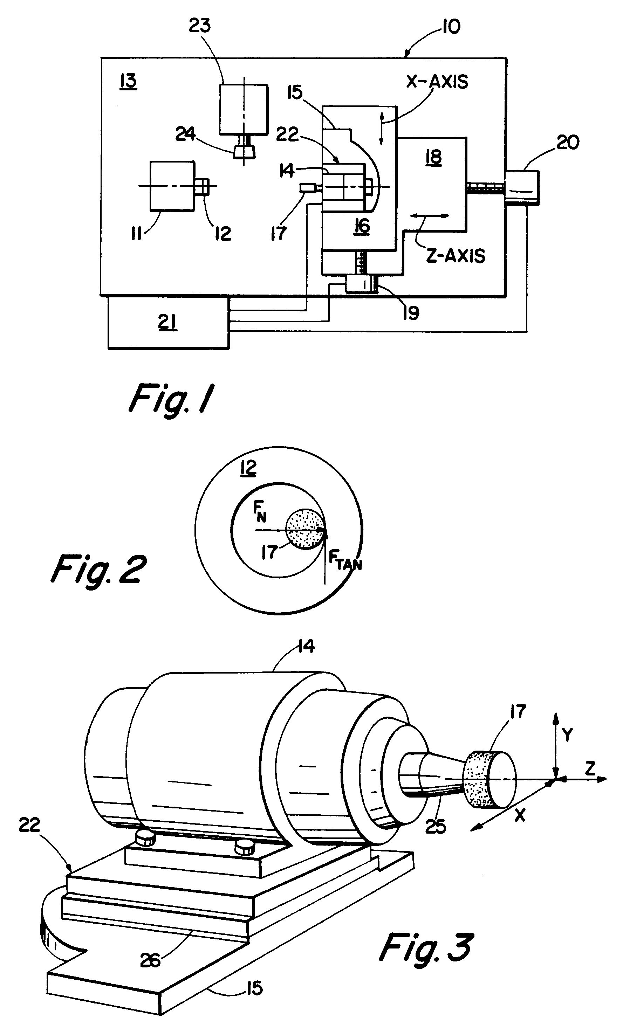

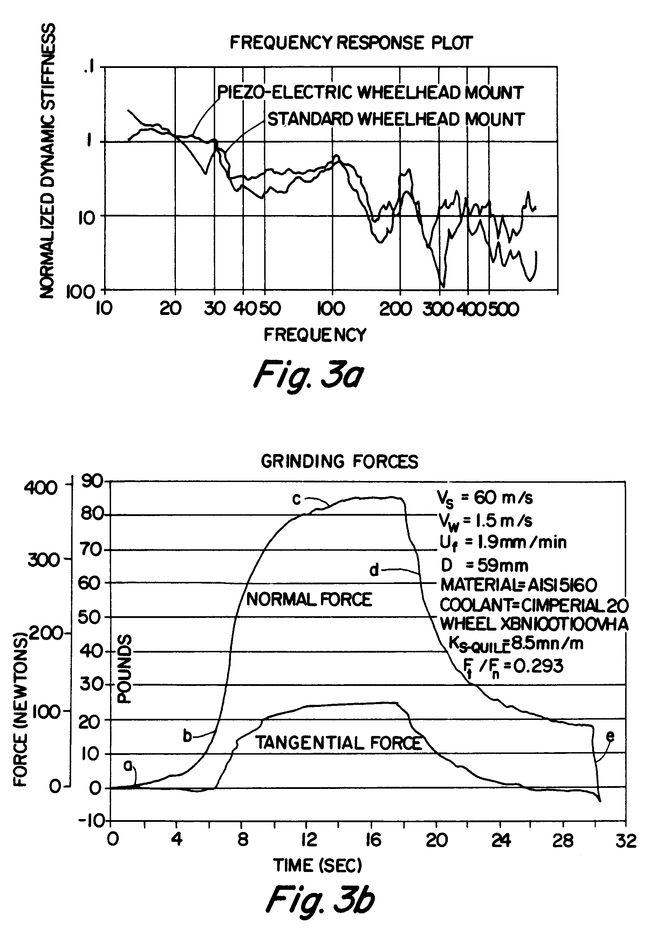

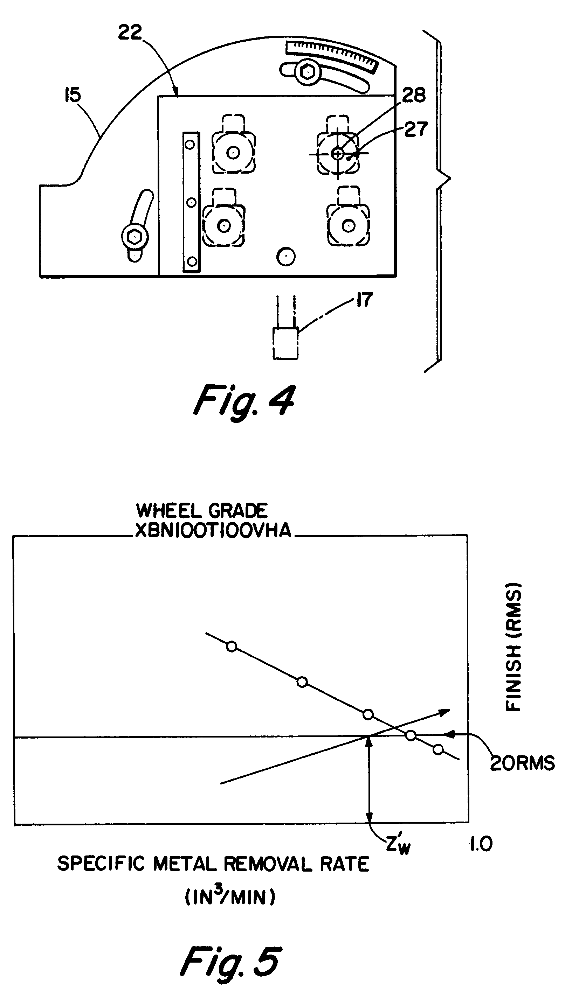

Referring to Figure 1 of the drawings, an exemplary internal grinding machine 10 is depicted, having a workhead 11 for supporting and driving a workpiece of revolution 12 during the grinding process. The machine 10 has a bed 13 which carries the workhead 11, and a grinding wheelhead 14 is mounted to a swivel plate 15, in turn carried by an X-axis slide 16, for moving the grinding wheel 17 radially to the workpiece 12 when performing grinding processes. The X-axis slide 16 is carried on a Z-axis slide 18, slidably mounted to the machine bed 13 for providing Z-axis movement, i.e. axially of the workpiece 12. Suitable X and Z axis servodrives 19, 20 are provided for moving the slides 16, 18. A computer numerical control (CNC) 21 is associated with the machine 10, and serves to provide servo commands in accordance with programmed instructions, and in accordance with force parameters detected from a wheelhead mounting transducer, or load cell 22 (see Figures 3 and 4).

The machine bed 13 also supports a wheel conditioning unit 23, in this case having a cup-shaped rotary diamond wheel 24, for dressing the superabrasive grinding wheel 17.

The elevational view of Figure 2 shows the grinding wheel 17 in a grinding mode, i.e. within the bore of the workpiece 12, wherein X-axis movement will cause a radial, normal force, $F_n$ to occur. A tangential force. $F_{tan}$ is also present during grinding. Figure 3 shows the grinding wheelhead 14 and grinding wheel 17, where the wheel 17 is mounted to a rotary spindle 25 in the wheelhead 14 and the wheelhead 14 is carried by the swivel plate 15, being affixed thereto by an intermediate plate 26 and very stiff load cell 22. As shown in Figure 4, the load cell 22 comprises an assembly constructed of four piezoelectric devices 27, i.e. solid state members which will yield a signal in response to an applied force. The load cell 22 depicted is a commercial assembly available from Kistler Instrument Co., and is heavily preloaded by means of assembly bolts 28, which establish a preload of several thousand pounds. The load cell 22 utilised is capable of detecting forces in X and Z directions (see Figure 1) and also the Y direction. i.e. into the plane of the paper as viewed in Figure 1, i.e., X, Y, and Z mutually-perpendicular force components. The X component, equivalent to $F_n$ in Figure 2 is extremely useful for determining system grind conditions, when considering the factor lambda ($\Lambda$), which is the volumetric rate of metal removal in cubic units per minute per unit normal force.

The previous mounting plate (not shown) was discarded. The load cell 22 replaces it exactly, without significant loss of machine stiffness (see Figure 3a). The devices 27 are preloaded to 0.1MN which ensures transducer linearity and cell stiffness.

The load cell 22 allows normal, tangential, and axial grinding forces to be simply obtained. Because cross coupling of signals is typically less than 1% it is not a problem. Therefore, with this system, force measurement fluctuations of less than IN are discernible.

The problem of signal drift (less than 0.5 Newton Sec.), inherent in piezoelectric devices, which is a linear function within the time frame measured is computer adjusted.

In prior art machines, force measurements depended on compliant elements that allowed a discernible displacement proportional to the grinding force. With this machine a different approach is taken.

The preferred grinding wheel spindle 25 used in the machine is a high frequency spindle built with matched pairs of ABEC Class "9" angular contact ball bearings in both the front and rear. Such an arrangement was selected for its stiffness characteristics. At lower speeds, a 24 krpm spindle was used, this has a 14 kw motor and a static radial stiffness in excess of 90 MN/m. A 45 krpm spindle, with a 9.5 kW motor, was used for higher speed. This spindle had a static stiffness of 65MN/m. In both cases the stiffness is measured at the spindle nose.

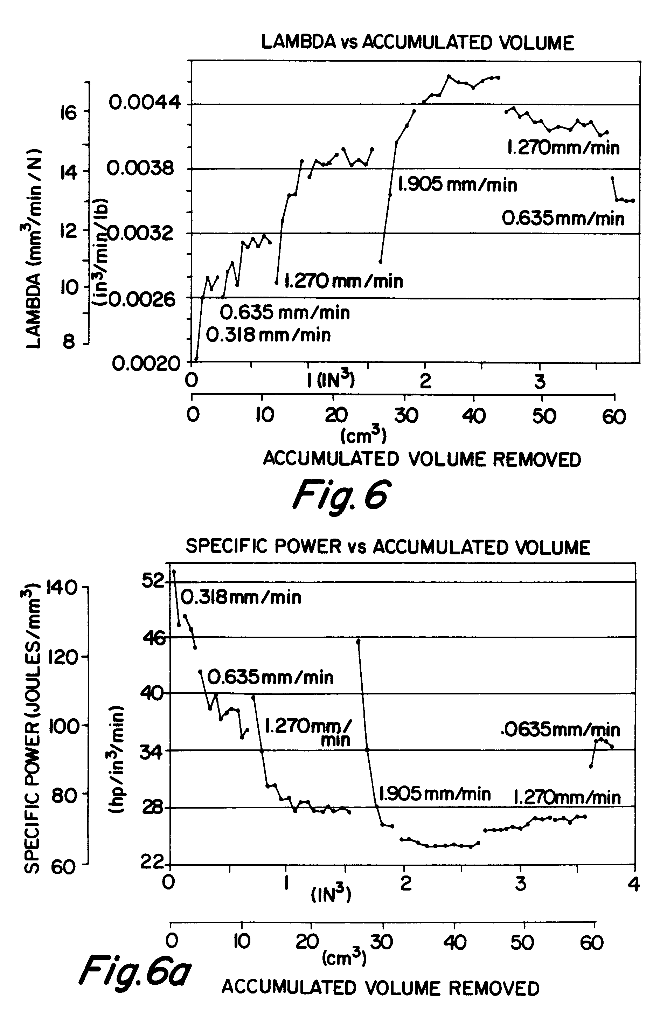

Referring to Figures 5 and 6, applicants have determined certain parameters for an exemplary wheel grade. Figure 5 is a plot of the logarithms specific metal removal rate versus finish, in RMS, while Figure 6 shows a family of curves for various feed rates, in which the value of lambda tends to level out, as steady-state conditions are reached. Thus, it has been determined that the values of lambda are important criteria for determining (a) an increase in wheel sharpness as grinding progresses, and (b) a means of getting an initially "dull" grinding wheel 17 up to a preferred lambda or grinding quality range.

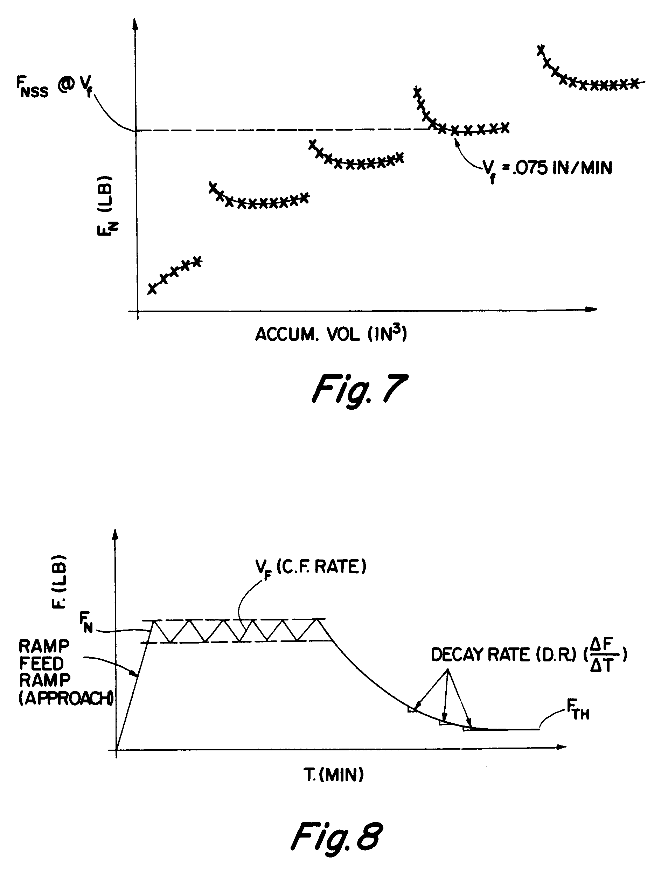

Figure 7 shows a plot of normal force versus accumulated volume, wherein a family of infeed rates are plotted and illustrate the steady-state condition which is reached with a superabrasive wheel 17.

Figure 8 is a graph describing a grinding cycle where the grinding wheel approaches rapidly and is held at a controlled force by adjusting the feed rate (C.F. rate) until infeed is stopped, then a dwell or spark-out period occurs in which the decay rate D.R. naturally decreases until a threshold force $F_{th}$ occurs at the end of decay rate; the threshold force is defined as an interface force between the grinding wheel and workpiece, at which no grinding occurs;

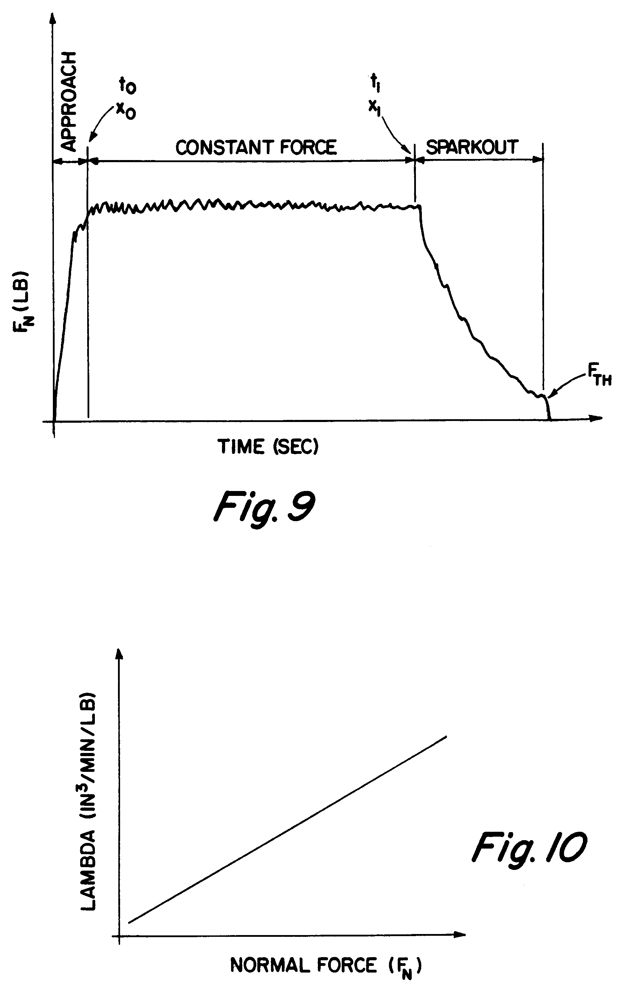

Figure 9 is a graph showing an actual plot of normal grinding force $F_n$ versus time.

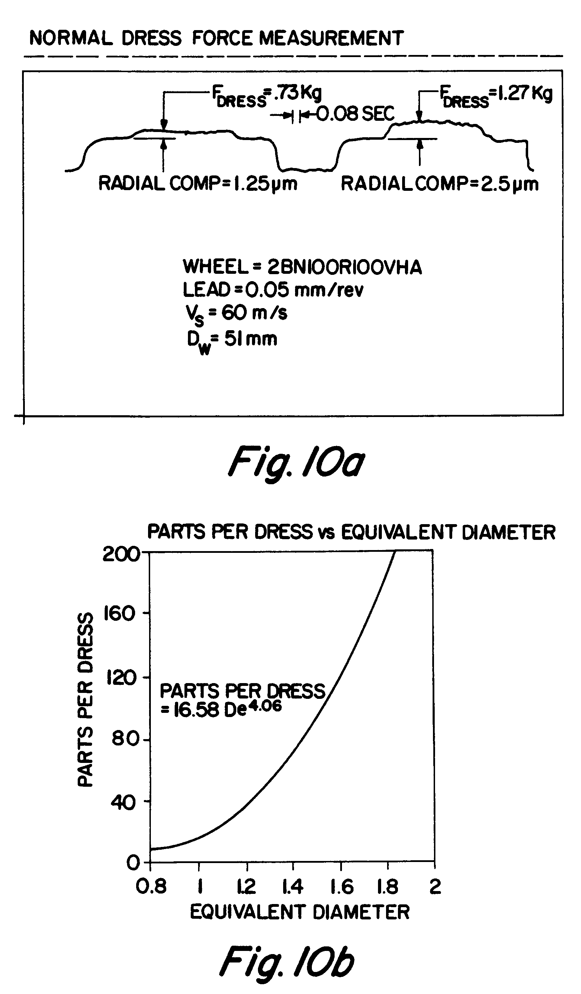

Figure 10 is a straightline plot of lambda versus normal force, and is useful for determining one parameter when the other one is selected.

In addition to the standard criteria describing the composition of a vitreous bonded CBN (or other superabrasive) grinding wheel i.e. grit size, concentration, bond volume, and porosity, a major factor in a determination of the wheel's metal removal characteristic is the condition of the wheel surface.

Immediately after truing there is little, if any, grain protrusion because the bond surface is flush with the grain tips. This causes a dull acting wheel with a low metal removal capacity. This wheel can be opened, or conditioned, by several methods including grit blasting, sticking with a soft Carborundum stick, or grinding, usually at reduced rates. The purpose of each of these methods is to erode the bond to create sufficient grit protrusion and chip clearance.

When running in a production situation, after a number of grinding cycles, the vitrified CBN wheel will eventually condition itself. This self-sharpening will continue until a steady-state or intrinsic wheel sharpness is reached. This intrinsic state would be the desired grinding condition. To reach this condition by grit blasting or sticking is difficult to achieve in any repeatable or predictable manner. Therefore, it is common to achieve this state by a controlled process which usually involves reducing the feed rate after a dress-off of a new wheel, and gradually increasing this rate as the wheel gets sharper. Some prior art machines are capable of automatically performing this conditioning cycle from discrete fixed input, however, applicants have conceived a system to do this automatically from feedback of the wheel sharpness value $\Lambda w$, described below.

Also, due to low wear rates, a vitrified bonded CBN wheel commonly skips some number of parts before requiring a re-truing operation. When it does, however, it is difficult to predict how the truing action will affect the wheel's sharpness or cutting capability. The process described below is a method to perform a hands-off, operator-free, conditioning cycle to accomodate the dulling effects of truing; either after new wheel dress-off or after a skip dress.

With successive parts ground, the wheel 17 acts sharper as the bond is eroded. As a result, the force level diminishes until an intrinsic sharpness value is reached. Two measurements of sharpness were

4

calculated. one measure, the metal removal parameter, Λw, is expressed as the volumetric rate of metal removal per unit force, mm³/min/N (Figure 6). Another is specific power expressed as joules/mm³ (Figure 6a). Both of these Figures illustrate the effect of feed rate on the steady state wheel sharpness.

The principle employed herein for adaptive grinding with bonded CBN abrasive is centred around the ability to measure the wheel condition continuously via monitoring of the grinding forces, coupled with the fact that, in a stiff machine set-up, the value of lamdba may be calculated (peridocially or continuously) by using wheel/workpiece displacement per unit time, rotational speed of the workpiece 12, and the width of the cut taken by the wheel 17. Typical output traces from the force measurement system are shown Figure 3b. The traces are characteristic and have five distinct phases:

(a) approach (non-contact);
(b) elastic take-up and force rise;
(c) grinding at steady state,
(d) spark-out; and
(e) the threshold force level above the non-contact state. The calculation of wheel sharpness values is the primary achievement; however, the specific energy, the energy at burn, and optimised spark-out times can also be achieved.

Further, with this sytem, dressing forces can be measured sensitively (Figure 10a), allowing the condition of the wheel face to be assessed. Thus the control can alert a wheel condition that exhibits non-uniform hardness, structure, or shape, and eliminate scrap parts due to improper bore profile or taper.

Referring to Figure 3b it may be noted that steady state maximum force levels and steady state decay threshold levels are approached. Based on the use of vitrified bonded CBN wheels, assumptions for negligible wheel wear and negligible sharpness changes within each cycle were made during tests. Therefore, in the steady state portion of the grind cycle, the spindle deflection rate is zero and the metal removal rate can be given by

$$Qw = [D_wW] [v_f]$$

$Q_w$ = metal removal rate
$D_w$ = workpiece diameter
W = contact width
$v_f$ = radial feed rate

Also, if the threshold force level is ascertained empirically for various wheel sharpness conditions then the grinding force decay rate at any point on the s-park out curve can be determined from

$$\frac{dF_n}{dt} = \left[ \frac{(F_i - F_{th} \; \Lambda w \; K_s}{\pi \; dw \; W \; 60} \right] \left[ \frac{-t_c \; \Lambda w \; K_s}{\pi \; e \; D_w \; W \; 60} \right]$$

$t = t_c$
$\Lambda W$ = metal removal parameter
$F_i$ = initial normal sparkout force
$F_{th}$ = threshold normal force
$K_s$ = system stiffness
$t_c$ = time

By observing this force trend, the condition of the wheel 17 is determinable. Hence, the decision to dress can be made based on grinding forces measured during the decay cycle.

Also, as the wheel shape deteriorates, the need to true become vital. Figures 10b shows how the equivalent diameter, $D_e$, and the dress frequency are related. This can be expressed simply as

$$PPD = A D_e B$$

PPD = parts per dress
A, B = wheel related constants

Figure 10a shows a plot of normal force measurements taken across two grinding wheels clamped together, side-by-side.

Using the piezoelectric load cell 22, the machine control is able to measure both the normal, grinding forces, $F_n$, and the tangential grinding force, $F_t$. From the $F_n$ measurement the control can achieve a constant force grind cycle, Figure 9. Because this normal force is held constant, a steady-state deflection situation is achieved where

$$Vf = v_s + v_w$$

where,
$v_f$ - "X" - axis feed rate
$v_s$ - rate of wheel radius change
$v_w$ - rate of work radius change
In addition, because of the neglibible wear rate of a vitrified bonded CBN wheel, vs can be assumed to be O, leaving

$$v_f = v_w$$

Referring to Figure 9, the machine control monitors a time interval during the constant force portion of the cycle, $t_0$ to $t_1$, and also the amount of X-axis feed during this interval, $X_O$ to $X_1$. It then calculates vf

$$v_f = \frac{X_1 - X_O}{t_1 - t_0} = \frac{\Delta x}{\Delta t}$$

Since the metal removal parameter lambda, or $\Lambda w$, is described as

$$\Lambda_w = \frac{\pi D W v_f}{F_n - F_{th}}$$

where,
D = work diameter
W = work width
$\pi$ = constant
Fth = threshold force
The control will then calculate a value for lamdba, since ( $\pi$, Y, D, X, W) $F_{th}$ is a constant, $F_n$ is set to a fixed set value, and $v_f$ was just calculated. Because $\Lambda w$ is a description of the wheel sharpness, or metal removal capability, the machine control can now consult a stored expression, derived either empirically or analytically, to determine an allowable grind force, $F_n$, corresponding to the $\Lambda w$ value, Figure 2. This new $F_n$ value will then also determine the corresponding $v_f$ value, since

$$vf = \frac{\Lambda w (F_n - F_{th})}{\pi D W}$$

to maintain this new $F_n$ value.

After every new wheel dress-off, skip dress, or dress on demand, the machine control 21 will automatically grind the next workpiece 12 at a predetermined test grind force, $F_n$-test. during this test grind a value for $\Lambda w$ will be determined. This value will then determine the constant $F_n$ value, and also the corresponding $v_f$ value, for the next grind cycle. This procedure will continue until the $F_n$ has reached a desired value, usually the value associated with the intrinsic $\Lambda w$ value of the grinding wheel 17.

While the terms "truing" and "dressing" are often used interchangeably in the prior art, separate definitions are used herein to attain a properly-conditioned wheel. Specifically dressing of the wheel is done primarily to establish the finish and ability to remove metal (i.e. surface intergrity of the wheel), and therefore, "dressing conditions" set in the machine cycle involve light cuts (and compensation therefor) at slow (relative) feed rates of the conditioning tool - - for example, diamond nib or wheel - - relative to the wheel. In contrast, truing of the wheel is done primarily to establish the shape of the wheel - - either where new or after use - - and therefore, "truing conditions" set in the machine cycle involve heavy cuts (and compensation therefor) at fast (relative) feed rates of the conditioning tool and wheel.

Therefore, a preferred single force grinding method is readily achieved as follows:

GRINDING METHOD - SINGLE FORCE SYSTEM

Step 1

With reference to Figures 5 and 6; on the assumption that truing makes a dull wheel, perform a sharpness test on a given wheel type -- for example, an XBN 100T 100VHA - - to determine:

a) $\Lambda$ of a dull wheel, i.e., $\Lambda min$;

b) $F_{th}$ of a dull wheel, i.e., $F_{th}$ max;

c) $F_{nss}$ (normal force at steady state) at $Z_w$ that produces the required RMS finish, i.e. $F_n$;

d)

$$\Lambda_{ss} = \frac{Z_w}{F_{nss}}$$

Step 2

Select:

a) Approach factor for Ramp Feed Rate, i.e., $N_1$;

b) Decay Rate

$$\frac{\Delta F}{\Delta t};$$

value to describe $F_{th}$, i.e., D.R.

c) C.F. Rate Factor to maintain grind force, i.e., $N_2$;

d) $\Lambda$ upper and lower limits for skip dress, i.e. $\Lambda u$, $\Lambda L$

Step 3

Determine grind parameters following multiple pass dress:

a)

$$C.F. \ Rate = \frac{\Lambda min \ (F_n - F_{th})}{\pi D W}, \ i.e. \ V_f \times N_2$$

b) Ramp Rate $= N_1 \times V_f$, i.e. $V_{AD}$

Step 4

Monitor actual wheel sharpness parameters during grind to determine rates for next cycle:

a) measure $\frac{\Delta x}{\Delta t}$ during constant force portion of cycle;

b) measure $F_{th}$ at predetermined decay rate value and adjust finish grind position accordingly;

c) calculate actual Λ, where

$$\Lambda_{act} = \pi DW \frac{\frac{\Delta x}{\Delta t}}{F_n - F_{th}}$$

d) compare $\Lambda act$ to $\Lambda w$ and $\Lambda L$ to determine if skip dress is required.

Step 5

Determine grind parameters for subsequent grind cycles
a) C.F. feed rate $= \frac{\Delta x}{\Delta t} \times N_2$, i.e., $V_f$
b) Ramp Race $= V_f \times N_1$, i.e. $V_A$;
c) spark-out time determined by D.R. setting.

Step 6

Continue steps 4 and 5 until a multiple pass dress is performed.

The method and apparatus disclosed herein are the outgrowth of a grinding set-up desgined to evalute superabrasive wheels - - in particular CBN wheels.

CBN GRINDING TEST SETUP AND DATA AQUISTION TECHNIQUES

Computerised data acquisition is an extremely powerful modern engineering tool. Analog or digital parameters can be electronically interfaced with personal computers for analysis. The desired triggering and timing can be easily programmed, and formulas can be applied to the inputs before they are stored. Once the data is collected other variables can be generated as a function of the measured items. Finally valuable graphs can be generated to show descriptively the relationships between the parameters. Because of the high resolution of the data, these graphs can be expanded to examine closely a particular area in greater detail. The following procedure described how a data acquisition system has been applied to test the internal grinding machine. This data acquisition process is used to evaluate wheels, grinding fluids, dressers, and most importantly, provide the basis for the adaptive control philosophy.

Test Data Acquisition Equipment

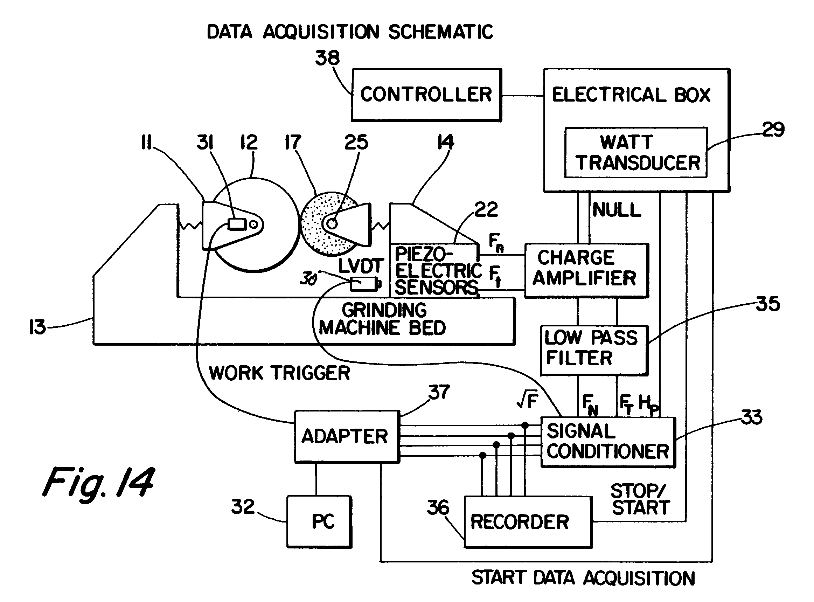

With reference to Figure 14, a schematic diagram, the principal elements of the test data acquisition system are,
a) a set of piezoelectric force rings (load cell 22), mounted under the grinding wheelhead 14 and 25 spindle for measuring grinding forces,
b) a power monitor (watt transducer 29) for determining wheelhead power consumption, and for cross-referencing $F_t$;
c) an LVDT 30 for monitoring the X-axis position;
d) a proximity switch 31 mounted at the rear of the workhead 11 for triggering the data collection activity;
e) a 32 bit microcomputer, PC32, with hard disc and floppy disc drives for collecting and storing the data;
f) signal conditioner (boards 33), amplifiers 34 and filters 35.

Signal Processing

Four parameters were measured
1) LVDT - slide position
2) HP - wheelhead power
3) $F_{tan}$ - tangential grinding force
4) $F_n$ - normal grinding force.

The normal and tangential forces are measured by the piezoelectric devices 27 of the load cell 22. The piezoelectric circuitry (not shown) has provisions to null when commanded.

The two measured force signals are then sent to a low pass filter 35 to eliminate variations due to wheelhead rotational speed. Both of these signals, along with the horsepower signal from the power monitor 29 and the displacement signal from the LVDT 30, are all fed into the signal conditioner 33. This minimises the noise generated by the servo drives 19, 20 and also adds a calibration point. The four signals are fed to both the personal computer, PC32, and a strip chart recorder 36.

The interface to the PC32 is via the data acquisition board, or adapter 37. Two additional inputs into the PC32 are a start acquisition signal and the workhead proximity switch 31. The strip chart recorder 36 was used during the test for comparison. The recorder 36 has start and stop inputs available.

Procedure to Acquire Data

Initially data was collected every .025 sec. This resulted in too much data being collected. The solution to this problem was to install the workhead proximity switch 31 as a trigger sensor to assure synchronization of acquisition with work speed. It was not important whether the maximum force, minimum force or some interim force was being recorded, because all grind cycles were purposely set up so that steady state forces were achieved.

The PC32 was programmed to wait for a start acquisition signal. When the signal was received, it collected data each time the workhead trigger was sensed. Just before the (CNC) machine controller 38 started the feed rate grind, a command was sent from the controller 38 to start the strip chart recorder 36. Half a second later the command was given to null the piezoelectric circuit associated with the load cell 22. This eliminated previous signal drift.

Simultaneously the data acquisition software was commanded to start the data collection. However, the first set of data was not saved until the proximity switch 31 on the workhead 11 was sensed. One set of four values was then stored in memory. These inputs were analog values. Negative ten volts to positive ten volts were represented by a value of 0 to 4095. Each time the proximity switch 31 was sensed, another set of data was stored. This continued until the controller 38 removed the start acquisition command after completing the grind cycle. Since the work speed was 480 RPM, data collection occurred eight times per second.

Once the grind cycle was completed, the acquisition software converted the raw data to actual values of mm, watts and newtons. The conversions had been previously specified by a programmable formula for each input. Then the values were automatically put into a spread sheet at previously defined cell locations. At this point the acquisition software had completed its task.

Now the spreadsheet took over using its macro capabilities. Normal force, tangential force, and the threshold force were sequentially displayed on the computer, PC32, as graphs to assure the intergrity of the data. Based on all the data in the spreadsheet, many calculations were performed. Maximum values of the steady state $F_n$, $F_{tan}$ and Power were determined for and used for the calculations.

Table 1 contains sample data that were saved on the hard disc in a report file from which summary data sheets were general.

9

| grind no | spec pwr joules/mm$^3$ | $F_n$ max N | $F_t$ max N | F th N | lambda mm$^3$/min/N | finish Ra | acc vol cm$^3$ |
|---|---|---|---|---|---|---|---|
| 15r1 | 123.5 | 773 | 286 | 98 | 10.8 | .31 | 26.60 |
| 15r2 | 98.3 | 645 | 233 | 89 | 13.1 | .33 | 27.81 |
| 15r3 | 77.0 | 573 | 199 | 85 | 14.9 | .33 | 29.02 |
| 15r4 | 71.5 | 556 | 188 | 85 | 15.4 | .33 | 30.25 |
| 15r5 | 71.0 | 536 | 182 | 80 | 16.0 | .34 | 31.46 |
| 15r6 | 67.5 | 527 | 176 | 80 | 16.3 | .34 | 32.68 |
| 15r7 | 67.5 | 522 | 175 | 80 | 16.5 | .34 | 33.89 |
| 15r8 | 66.4 | 523 | 173 | 80 | 16.5 | .34 | 35.10 |
| 15r9 | 65.4 | 506 | 174 | 80 | 17.1 | .35 | 36.31 |
| 15r10 | 65.4 | 511 | 171 | | 16.9 | .35 | 37.53 |
| 15r11 | 65.4 | 512 | 171 | 80 | 16.9 | .34 | 38.74 |
| 15r12 | 66.0 | 516 | 171 | 80 | 16.8 | .35 | 39.97 |
| 15r13 | 65.7 | 510 | 170 | 80 | 16.9 | .35 | 41.18 |
| 15r14 | 65.6 | 507 | 171 | 80 | 17.1 | .36 | 42.39 |
| 15r15 | 66.1 | 506 | 171 | 80 | 17.1 | .36 | 43.61 |

Table 1: Report Summary for test Wheel 15 at 1.905 $\frac{mm}{min}$ (.075 IPM)

The normal force may also be used to trigger the end of a gap eliminator rate, i.e. where a wheelslide is advanced to the workpiece at a maximum rate, to avoid "cutting air" at a grinding feed rate. When the wheel contacts the workpiece, the gap rate is dropped out and the machine goes into a rapid, coarse grinding rate.

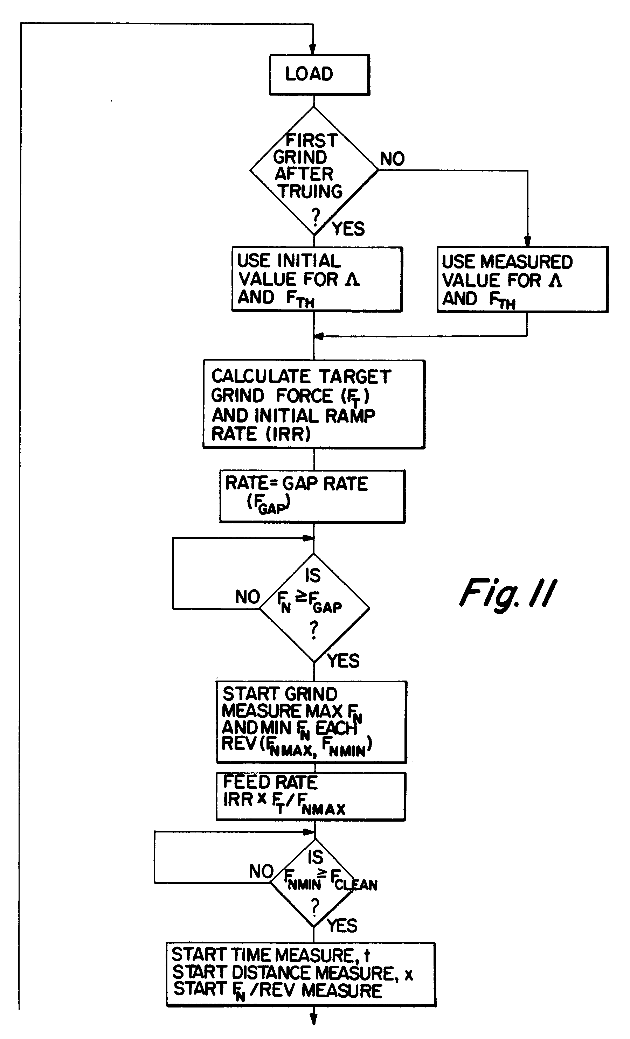

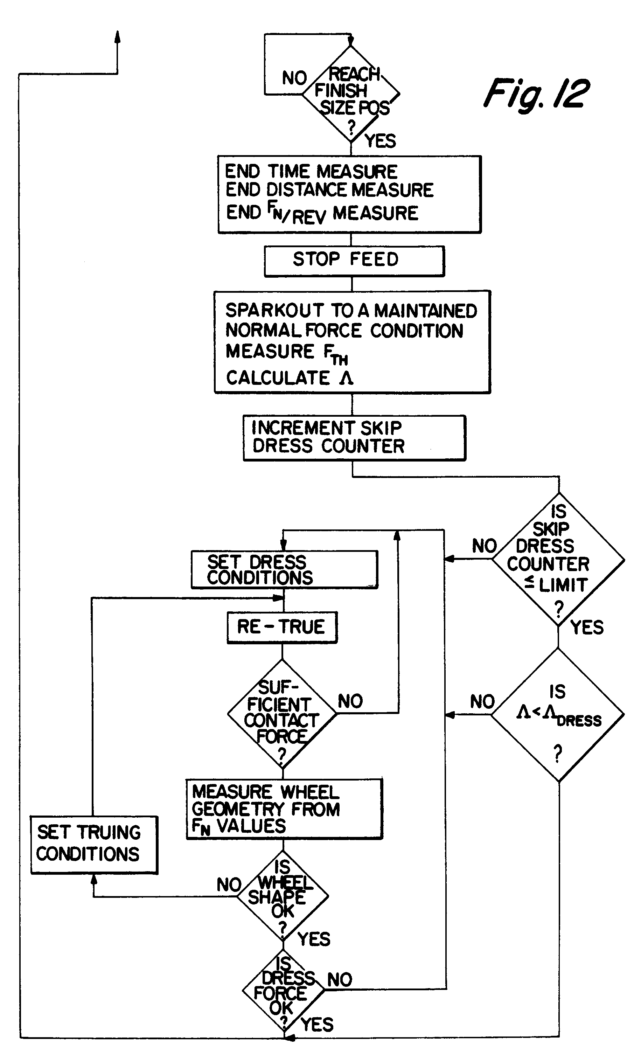

The flow chart of Figures 11 and 12 show a preferred production grinding cycle controlled in response to monitored normal force, and including a gap eliminator rate.

Out of Roundess Detection

The load cell 22 may also be used for sampling variations in normal force around the grind periphery, and thereby determine out-of-roundness of the workpiece 12. In tests, as many as 30 intermittent force values have been sampled on the periphery. The infeed is then varied in proportion to the sampled force values to round-up the workpiece 12.

Claims

1. A grinding machine (10) for grinding a workpiece (12), said machine having a base (3), a wheelhead (14) supported by said machine base for carrying a rotatable superabrasive grinding wheel (17), means (16, 18, 19, 20) for relatively feeding said wheel and a workpiece at a feed rate along a normal force vector between the two, and an apparatus for automatically and adaptively controlling and optimizing grinding processes and conditioning of the wheel during grinding of individual workpieces, said apparatus comprising:

means (22) for measuring the magnitude of the normal force ($F_N$) occurring between said wheel (17) and said workpiece (12), said means (22) including a force transducer (27) mounted adjacent said wheelhead (14);

means (22, 29, 30, 32) for continuously monitoring the relative wheel sharpness, said wheel sharpness being a calculated value based upon the feed rate ($V_F$) and the measured normal force ($F_N$);

means (32) for determining the maximum allowable normal force ($F_N$) between said wheel and said workpiece for the calculated sharpness of said wheel; and

means (21, 32, 38) for automatically varying said feed rate during the grinding process in response to the calculated wheel sharpness to maintain a maximum allowable normal force ($F_N$) for the calculated wheel sharpness to automatically condition the wheel (17) and to optimize the grinding process.

2. The grinding machine of claim 1, wherein said force transducer (27) includes a piezoelectric element.

3. The grinding machine of claim 2, wherein said force transducer (27) includes a load cell affixed to said wheelhead

4. The grinding machine of claim 2, wherein said force transducer comprises a plurality of piezoelectric elements (27) located between said wheelhead (14) and said base (3), each of said piezoelectric elements capable of detecting force variations in three mutually perpendicular directions such that said normal force accurately monitored.

5. The grinding machine of claim 1, wherein said force transducer (27) is located between the wheelhead and said base.

6. The grinding machine of claim 1, wherein said means for determining wheel sharpness includes control means (32, 38) for automatically receiving input from said measuring means and utilizing this input to monitor wheel sharpness and provide appropriate commands to said varying means to optimize the grinding process.

7. A grinding machine according to any one of the preceding claims wherein:

said means (22) for measuring the magnitude of the normal force ($F_N$) occurring between said wheel and said workpiece is operative through substantially at least one revolution of said workpiece,

said means (22, 29, 30, 32) for continuously monitoring the relative wheel sharpness is operative continuously to monitor the relative sharpness of the wheel based upon said initial feed rate and the measured normal force; and

said means (21, 32, 38) for automatically varying said feed rate is operative automatically to vary said initial feed rate during the grinding process to achieve said maximum allowable normal force during each revolution of said workpiece.

8. The grinding machine of claim 7 wherein said maximum optimal normal force is determined a plurality of times during each revolution of said workpiece.

9. A grinding machine according to any one of the preceding claims wherein said means for determining said maximum allowable normal force comprises a stored expression which determines the allowable grind force for a calculated relative wheel sharpness to assist said control means in providing appropriate commands to optimize conditioning and grinding processes.

10. A method for automatically conditioning a grinding wheel (17) and optimizing grinding processes with a superabrasive grinding wheel in a grinding machine (10), said method including the steps of:

(a) rotating a workpiece (12) to be ground on a workhead;

(b) rotating a superabrasive grinding wheel (17) on a wheelhead;

(c) effecting relative feed movement between said workhead and wheelhead to cause contact of said wheel with said workpiece, said movement being set at an initial feed rate;

(d) detecting the normal contact force ($F_N$) between said wheel and workpiece by a force transducer (27) mounted adjacent said wheelhead;

(e) monitoring said normal contact force while grinding;

(f) continuously monitoring the relative wheel sharpness, being a calculated value based upon feed rate ($V_F$) and the measured normal force ($F_N$);

(g) determining the maximum normal force allowable between said wheel and said workpiece for the calculated value wheel sharpness; and

(h) automatically adjusting the feed rate of said feed movement during grinding processes in accordance with said calculated wheel sharpness to maintain a substantially constant, maximum allowable normal contact force between said wheel and workpiece to optimise the wheel conditioning and grinding processes.

11. The method of claim 10 including the step of limiting said normal contact force between said wheel and workpiece to a predetermined maximum.

12. The method of claim 10, further including the step of reshaping said superabrasive grinding wheel after the sooner of a predetermined number of workpieces have been ground or when the determined relative sharpness of said wheel is greater than a predetermined upper limit of sharpness.

13. The method of claim 10, further comprising the step of periodically reshaping said superabrasive grinding wheel, and wherein following the step of reshaping, the initial feed rate is utilized to begin grinding the next workpiece.

14. The method of claim 10, further comprising repeating the steps (e), (f) and (g) and replacing the initial feed rate of step (e) with the adjusted feed rate.

**Patentansprüche**

1. Schleifmaschine (10) zum Schleifen eines Werkstücks (12), welche Maschine einen Sockel (3) aufweist, ein von dem besagten Maschinensockel gehaltenen Scheibenkopf (14) zum Tragen einer drehbaren Hochleistungsschleifscheibe (17), Mittel (1, 18, 19, 20) zum relativen Vorschub der besagten Scheibe und eines Werkstücks mit einer Vorschubgeschwindigkeit entlang eines Normalkraftvektors zwischen beiden, und eine Vorrichtung zum automatischen und angepaßten Steuern und Optimieren der Schleifvorgänge und zum Überholen der Scheibe während des Schleifens einzelner Werkstücke, wobei die Vorrichtung umfaßt:
eine Einrichtung (22) zum Messen der Größe der zwischen der besagten Scheibe (17) und dem besagten Werkstück (12) auftretenden Normalkraft ($F_N$), wobei die Vorrichtung (22) einen Kraftübertrager (27) einschließt, der benachbart zu dem besagtem Scheibenkopf (14) gehalten ist;
eine Einrichtung (22, 29, 30, 32) zum fortlaufenden Überwachen der relativen Scheibenschärfe, wobei die Scheibenschärfe ein auf der Vorschubgeschwindigkeit ($V_F$) und der gemessenen Normalkraft ($F_N$) basierender, berechneter Wert ist;
eine Einrichtung (32) zum Bestimmen der maximal zulässigen Normalkraft ($F_N$) zwischen der besagten Scheibe und dem besagten Werkstück für die berechnete Schärfe der besagten Scheibe; und eine Einrichtung (21, 32, 38) zum automatischen Verändern der besagten Vorschubgeschwindigkeit während des Schleifvorgangs, ansprechend auf die berechnete Scheibenschärfe, um eine maximal zulässige Normalkraft für die berechnete Scheibenschärfe aufrechtzuerhalten, um die Scheibe (17) automatisch zu überholen und den Schleifvorgang zu optimieren.

2. Schleifmaschine nach Anspruch 1, dadurch gekennzeichnet, daß der besagte Kraftübertrager (27) ein piezoelektrisches Element einschließt.

3. Schleifmaschine nach Anspruch 2, dadurch gekennzeichnet, daß der besagte Kraftübertrager (27) eine Kraftmeßdose aufweist, die an dem besagten Scheibenkopf befestigt ist.

4. Schleifmaschine nach Anspruch 2, dadurch gekennzeichnet, daß der besagte Kraftübertrager eine Anzahl piezoelektrischer Elemente (27) aufweist, die zwischen dem besagten Scheibenkopf (14) und dem besagten Sockel (4) angeordnet sind, wobei jedes der besagten piezoelektrischen Elemente in der Lage ist, Kraftveränderungen in drei aufeinander senkrechten Richtungen zu erfassen, so daß die besagte Normalkraft exakt überwacht wird.

5. Schleifmaschine nach Anspruch 1, dadurch gekennzeichnet, daß der besagte Kraftübertrager (27) zwischen dem Scheibenkopf und dem besagten Sockel angeordnet ist.

6. Schleifmaschine nach Anspruch 1, dadurch gekennzeichnet, daß die besagte Einrichtung zum Bestimmen der Scheibenschärfe eine Steuereinrichtung (32, 38) zum automatischen Aufnehmen eines Eingangssignals aus der besagten Meßeinrichtung und zum Verwenden dieses Eingangssignals aufweist, um die Scheibenschärfe zu überwachen und um geeignete Befehle an die besagte Einrichtung zum Verändern bereitzustellen, um den Schleifvorgang zu optimieren.

7. Schleifmaschine nach einem der vorangehenden Ansprüche, dadurch gekennzeichnet, daß:
die besagte Einrichtung (22) zum Messen der Größe der Normalkraft ($F_N$), die zwischen der Scheibe und dem Werkstück auftritt, während im wesentlichen wenigstens einer Umdrehung des besagten Werkstücks arbeitet,
die besagte Einrichtung (22, 29, 30, 32) zum fortlaufenden Überwachen der relativen Scheibenschärfe fortlaufend arbeitet, um die relative Schärfe der Scheibe auf der Basis der anfänglichen Vorschubgeschwindigkeit und der gemessenen Normalkraft zu überwachen; und
die besagte Einrichtung (21, 32, 38) zum automatischen Verändern der besagten Vorschubgeschwindigkeit automatisch arbeitet, um die besagte anfängliche Vorschubgeschwindigkeit während des Schleifvorgangs zu verändern, um die besagte, maximal zulässige Normalkraft während jeder Umdrehung des besagten Werkstücks zu erzielen.

8. Schleifmaschine nach Anspruch 7, dadurch gekennzeichnet, daß die besagte maximale, optimale Normalkraft während jeder Umdrehung des besagten Werkstücks mehrfach bestimmt wird.

9. Schleifmaschine nach einem der vorangehenden Ansprüche, dadurch gekennzeichnet, daß die besagte Einrichtung zum Bestimmen der maximalen, zulässigen Normalkraft einen gespeicherten Ausdruck umfaßt, der die zulässige Schleifkraft für eine berechnete, relative Scheibenschärfe gestattet, um die besagte Steuereinrichtung beim Bereitstellen geeigneter Befehle zur Optimierung der Überhol- und Schleifvorgänge zu unterstützen.

10. Verfahren zum automatischen Überholen einer Schleifscheibe (17) und zum Optimieren von Schleifvorgängen mit einer Hochleistungsschleifscheibe an einer Schleifmaschine (10), welches Verfahren folgende Schritte einschließt:
(a) Drehen eines zu schleifenden Werkstücks (12) auf einem Arbeitskopf;
(b) Drehen einer Hochleistungsschleifscheibe (17) auf einem Scheibenkopf;
(c) Bewirken einer relativen Vorschubbewegung zwischen dem besagten Arbeitskopf und dem Scheibenkopf, um eine Berührung der besagten Scheibe mit dem besagten Werkstück herbeizuführen, wobei die Bewegung auf eine anfängliche Vorschubgeschwindigkeit eingestellt ist;
(d) Erfassen der normalen Berührungskraft ($F_N$) zwischen Scheibe und Werkstück durch einen Kraftübertrager (27), der benachbart zum Scheibenkopf gehalten ist;
(e) Überwachen der normalen Kontaktkraft während des Schleifens;
(f) fortlaufendes Überwachen der relativen Scheibenschärfe, welche ein berechneter Wert auf der Basis der Vorschubgeschwindigkeit ($V_F$) und der gemessenen Normalkraft ($F_N$) ist;
(g) Feststellen der maximal zulässigen Normalkraft zwischen Scheibe und Werkstück für den berechneten Wert der Scheibenschärfe; und
(h) automatisches Anpassen der Vorschubgeschwindigkeit der besagten Vorschubbewegung während der Schleifvorgänge, gemäß der berechneten Scheibenschärfe, um eine im wesentlichen konstante, maximal zulässige normale Kontaktkraft zwischen Scheibe und Werkstück aufrechtzuerhalten, um den Scheibenüberholungs- und Schleifvorgang zu optimieren.

11. Verfahren nach Anspruch 10, gekennzeichnet durch den Schritt, daß die besagte, normale Kontaktkraft zwischen Scheibe und Werkstück auf ein vorbestimmtes Maximum begrenzt wird.

12. Verfahren nach Anspruch 10, gekennzeichnet durch den Schritt, daß die besagte Hochleistungsschleifscheibe überholt wird, nachdem eine vorbestimmte Anzahl von Werkstücken geschliffen wurde oder wenn die vorbestimmte, relative Schärfe der Scheibe größer ist als eine vorbestimmte, obere Grenze der Schärfe, je nachdem, was eher eintritt.

13. Verfahren nach Anspruch 10, gekennzeichnet durch den Schritt, daß die Hochleistungsschleifscheibe periodisch überholt wird, und wobei nach dem Schritt des Überholens beim Schleifbeginn des nächsten Werkstücks die anfängliche Vorschubgeschwindigkeit verwendet wird.

EP 0 356 663 B1

**14.** Verfahren nach Anspruch 10, dadurch gekennzeichnet, daß die Schritte (e), (f) und (g) wiederholt werden und die anfängliche Vorschubgeschwindigkeit des Schritts (e) durch die eingestellte Vorschubgeschwindigkeit ersetzt wird.

**Revendications**

**1.** Rectifieuse (10) pour rectifier une pièce (12), ladite rectifieuse ayant un bâti (3), une poupée (14) porte-meule supportée par ledit bâti de la machine pour supporter une meule rotative superabrasive de travail (17), des moyens (16, 18, 19, 20) pour faire avancer d'une manière relative ladite meule et une pièce à une vitesse d'avance sur un vecteur de force normale entre les deux, et un dispositif pour commander et optimaliser d'une manière automatique et adaptative les opérations de rectification et la mise en état de la meule pendant la rectification de pièces successives, ledit dispositif comprenant:

un moyen (22) pour mesurer la valeur de la force normale ($F_N$) survenant entre ladite meule (17) et ladite pièce (12), ledit moyen (22) comportant un transducteur (27) de force monté au voisinage immédiat de ladite poupée (14) porte-meule;

des moyens (22, 29, 30, 32) pour contrôler d'une manière continue l'affûtage relatif de la meule, ledit affûtage de la meule étant une valeur calculée fondée sur la vitesse d'avance ($V_F$) et la force normale mesurée ($F_N$);

un moyen (32) pour déterminer la force normale maximale admissible ($F_N$) entre ladite meule et ladite pièce pour l'affûtage calculé de ladite meule; et

des moyens (21, 32, 38) pour modifier automatiquement ladite vitesse d'avance pendant le travail de rectification en réponse à l'affûtage calculé de la meule pour maintenir une force normale maximale admissible ($F_N$) pour l'affûtage calculé de la meule afin de mettre automatiquement en état la meule (17) et d'optimaliser le travail de rectification.

**2.** Rectifieuse selon la revendication 1, dans laquelle ledit transducteur (27) de force comporte un élément piézoélectrique.

**3.** Rectifieuse selon la revendication 2, dans laquelle ledit transducteur (27) de force comporte un dynamomètre fixé à ladite poupée porte-meule.

**4.** Rectifieuse selon la revendication 2, dans laquelle ledit transducteur de force comporte une pluralité d'éléments piézoélectriques (27) situés entre ladite poupée (14) porte-meule et ledit bâti (3), chacun desdits éléments piézoélectriques étant apte à détecter des variations de force dans trois directions mutuellement perpendiculaires de façon que ladite force normale soit contrôlée d'une manière précise.

**5.** Rectifieuse selon la revendication 1, dans laquelle ledit transducteur (27) de force se trouve entre la poupée porte-meule et ledit bâti.

**6.** Rectifieuse selon la revendication 1, dans laquelle lesdits moyens pour déterminer l'affûtage de la meule comprennent un moyen de commande (32, 38) pour recevoir automatiquement des données d'entrée provenant dudit moyen de mesure et pour utiliser ces données d'entrée afin de contrôler l'affûtage de la meule et de fournir auxdits moyens de variation des instructions appropriées pour optimaliser le travail de rectification.

**7.** Rectifieuse selon l'une quelconque des revendications précédentes, dans laquelle:

ledit moyen pour mesurer la valeur de la force normale ($F_N$) survenant entre ladite meule et ladite pièce fonctionne sensiblement pendant au moins toute une rotation de ladite pièce,

lesdits moyens (22, 29, 30, 32) pour contrôler d'une manière continue l'affûtage relatif de la meule fonctionnent d'une manière continue pour contrôler l'affûtage relatif de la meule en fonction de ladite vitesse d'avance initiale et de la force normale mesurée; et

lesdits moyens (21, 32, 38) pour modifier automatiquement ladite vitesse d'avance fonctionnent d'une manière automatique pour modifier ladite vitesse initiale d'avance pendant le travail de rectification afin d'obtenir ladite force normale maximale admissible pendant chaque rotation de ladite pièce.

**8.** Rectifieuse selon la revendication 7, dans laquelle ladite force normale maximale optimale est déterminée plusieurs fois pendant chaque rotation de ladite pièce.

14

9. Rectifieuse selon l'une quelconque des revendications précédentes, dans laquelle ledit moyen pour déterminer ladite force normale maximale admissible comporte une expression en mémoire qui détermine la force de rectification admissible pour un affûtage relatif calculé de la meule afin d'aider ledit moyen de commande à fournir des instructions appropriées pour optimaliser les travaux de mise en état et de rectification.

10. Procédé pour mettre automatiquement en état une meule de rectification (17) et pour optimaliser des travaux de rectification à l'aide d'une meule de rectification superabrasive dans une rectifieuse (10), ledit procédé comportant les étapes consistant à:

(a) faire tourner, sur une poupée porte-pièce, une pièce (12) à rectifier;

(b) faire tourner, sur une poupée porte-meule, une meule de rectification superabrasive (17);

(c) réaliser un mouvement d'avance relative entre ladite poupée porte-pièce et ladite poupée porte-meule afin d'amener ladite meule au contact de ladite pièce, ledit mouvement étant établi à une vitesse d'avance initiale;

(d) détecter la force normale de contact ($F_N$) entre ladite meule et ladite pièce à l'aide d'un transducteur (27) de force monté au voisinage de ladite poupée porte-meule;

(e) contrôler ladite force normale de contact pendant la rectification;

(f) contrôler d'une manière continue l'affûtage relatif de la meule, dont la valeur est une valeur calculée fondée sur la vitesse d'avance ($V_F$) et la force normale mesurée ($F_N$);

(g) déterminer la force normale maximale admissible entre ladite meule et ladite pièce pour la valeur calculée de l'affûtage de la meule; et

(h) régler automatiquement la vitesse d'avance pour ledit mouvement d'avance pendant les travaux de rectification en fonction dudit affûtage calculé de la meule afin de maintenir une force normale maximale admissible de contact sensiblement constante entre ladite meule et ladite pièce afin d'optimaliser les travaux de mise en état et de rectification de la meule.

11. Procédé selon la revendication 10, comportant l'étape consistant à limiter à un maximum prédéterminé ladite force normale de contact entre ladite meule et ladite pièce.

12. Procédé selon la revendication 10, comportant en outre l'étape consistant à reprofiler ladite meule de rectification superabrasive après la pièce survenant la première parmi un nombre prédéterminé de pièces ou lorsque l'affûtage relatif déterminé de ladite meule est supérieur à une limite supérieure d'affûtage prédéterminée.

13. Procédé selon la revendication 10, comportant en outre l'étape consistant à reprofiler périodiquement ladite meule de rectification superabrasive, et dans lequel, après l'étape de reprofilage, la vitesse d'avance initiale est utilisée pour commencer à rectifier la pièce suivante.

14. Procédé selon la revendication 10, comportant en outre la répétition des étapes (e), (f) et (g) et le remplacement de la vitesse d'avance initiale de l'étape (e) par la vitesse d'avance réglée.

**Fig. 1**

**Fig. 2**

**Fig. 3**

## FREQUENCY RESPONSE PLOT

*Fig. 3a*

## GRINDING FORCES

$V_S = 60 \, m/s$
$V_W = 1.5 \, m/s$
$U_f = 1.9 \, mm/min$
$D = 59mm$
MATERIAL = AISI 5160
COOLANT = CIMPERIAL 20
WHEEL XBN100T100VHA
$K_{S-QUILL} = 8.5 \, mn/m$
$F_t/F_n = 0.293$

*Fig. 3b*

*Fig. 4*

WHEEL GRADE
XBNI00TI00VHA

FINISH (RMS)

20RMS

$Z'_W$

1.0

SPECIFIC METAL REMOVAL RATE

$(IN^3/MIN)$

*Fig. 5*

## LAMBDA vs ACCUMULATED VOLUME

**Fig. 6**

## SPECIFIC POWER vs ACCUMULATED VOLUME

**Fig. 6a**

Fig. 7

Fig. 8

**Fig. 9**

**Fig. 10**

NORMAL DRESS FORCE MEASUREMENT

$F_{DRESS}$ = .73 Kg

$F_{DRESS}$ = 1.27 Kg

0.08 SEC

RADIAL COMP = 1.25 μm

RADIAL COMP = 2.5 μm

WHEEL = 2BN100RI00VHA
LEAD = 0.05 mm/rev
$V_S$ = 60 m/s
$D_W$ = 51 mm

*Fig. 10a*

PARTS PER DRESS vs EQUIVALENT DIAMETER

PARTS PER DRESS
= 16.58 $De^{4.06}$

PARTS PER DRESS

EQUIVALENT DIAMETER

*Fig. 10b*

LOAD

FIRST GRIND AFTER TRUING ?

NO → USE MEASURED VALUE FOR $\Lambda$ AND $F_{TH}$

YES → USE INITIAL VALUE FOR $\Lambda$ AND $F_{TH}$

CALCULATE TARGET GRIND FORCE ($F_T$) AND INITIAL RAMP RATE (IRR)

RATE = GAP RATE ($F_{GAP}$)

IS $F_N \geq F_{GAP}$ ?

NO (loop back)

YES

START GRIND MEASURE MAX $F_N$ AND MIN $F_N$ EACH REV ($F_{NMAX}$, $F_{NMIN}$)

FEED RATE IRR $\times F_T / F_{NMAX}$

IS $F_{NMIN} \geq F_{CLEAN}$ ?

NO (loop back)

YES

START TIME MEASURE, $t$ START DISTANCE MEASURE, $x$ START $F_N$ /REV MEASURE

*Fig. 11*

23

# Fig. 12

Fig. 13

# DATA ACQUISITION SCHEMATIC

Fig. 14